# EUROPÄISCHE PATENTANMELDUNG

(11) **EP 3 076 287 A1**
(43) Veröffentlichungstag der Anmeldung: **05.10.2016**
(21) Anmeldenummer: 16162640.3
(22) Anmeldetag: 29.03.2016
(51) Int. Cl.: G06F 3/14, G06F 3/0483, G09G 5/14, G06F 3/01, G06F 1/16

(54) **VERFAHREN ZUM NAVIGIEREN DURCH DIE AUF DER ANZEIGEEINHEIT EINES MOBILEN ELEKTRONISCHEN GERÄTS DARGESTELLTEN INHALTE UND MOBILES ELEKTRONISCHES GERÄT MIT EINER ANZEIGEEINHEIT**

(30) Priorität: 31.03.2015 DE 102015004229
(71) Anmelder: SITEC GmbH Sicherheitseinrichtungen und technische Geräte, 96369 Weißenbrunn (DE)
(72) Erfinder: Heinlein, Werner, 96317 Kronach (DE)
(74) Vertreter: Pröll, Jürgen

(57) **Zusammenfassung**

Es werden ein Verfahren zum Navigieren durch die auf der Anzeigeeinheit (12) eines mobilen elektronischen Geräts (10) dargestellten Inhalte und ein mobiles elektronisches Gerät (10) beschrieben. Das mobile elektronische Gerät (10) weist mindestens eine Anzeigeeinheit (12), eine Hauptsteuereinheit und eine Erfassungseinrichtung auf und ist dazu ausgebildet, eine Vielzahl von Anwendungsprogrammen über die Anzeigeeinheit graphisch darzustellen. Es werden mindestens zwei Anzeigen generiert, wobei die Hauptsteuereinheit eine virtuelle Anordnung (14) der mindestens zwei Anzeigen erzeugt und die mindestens zwei Anzeigen in der virtuellen Anordnung (14) örtlich versetzt zueinander ausgerichtet sind. Über die Erfassungseinrichtung wird ein Bedienbefehl erfasst und an die Hauptsteuereinheit übermittelt, welche aus dem Bedienbefehl einen Änderungswunsch für eine Änderung der über die Anzeigeeinheit (12) dargestellten Inhalte ermittelt. Dann wird eine zweite Anzeige auf der Anzeigeeinheit (12) dargestellt, welche in der virtuellen Anordnung (14) von Anzeigen eine benachbarte Position in der erfassten Richtung zu einer ersten Anzeige aufweist.

## Beschreibung

Es werden ein Verfahren zum Navigieren durch die auf der Anzeigeeinheit eines mobilen elektronischen Geräts dargestellten Inhalte und ein mobiles elektronisches Gerät mit einer Anzeigeeinheit beschrieben. Mobile elektronische Geräte sind bspw. Smartphones, PDAs, Mobiltelefone und Tablet-Computer. Mobile elektronische Geräte werden auch als "mobile device", "handheld device" oder "portable electronic device" bezeichnet.

### Stand der Technik

Mobile Geräte, wie z.B. Smartphones, haben aufgrund von Mobilitätsanforderungen (z.B. Größe) nur ein Display. Ein Umschalten z.B. zu einer anderen, bereits geöffneten Webseite, wird mittels Wischbewegung am Touch-Display, oder durch Antippen am Touch-Display ausgeführt.

### Nachteile des Stands der Technik

Komplexere Aufgaben, die eigentlich nur dann sinnvoll zu bewältigen sind, wenn man z.B. zwei Monitore hat, lassen sich nur sehr schwer mit Mobilen Geräten, wie z.B. Smartphones, ausführen.

Bei anderen Systemen, wie z.B. bei Office-PCs hat sich mittlerweile der Zweitmonitor etabliert. Der Vorteil besteht darin, dass bspw. Informationen auf einem linken Monitor dargestellt werden können und gleichzeitig auf einem rechten Monitor gearbeitet werden kann. So können auch sehr einfach Daten vom linken Monitor kopiert und im rechten Monitor, in z.B. ein Arbeitsblatt, eingefügt werden. Die Übersichtlichkeit ist dadurch wesentlich größer. Insbesondere ist die Übersichtlichkeit größer als bei der gleichzeitigen Darstellung aller Informationen auf einem Monitor oder wenn zwischen verschiedene Ansichten auf einem Monitor ständig gewechselt werden muss.

Ein weiterer Nachteil bei mobilen elektronischen Geräten aus dem Stand der Technik besteht trotz der Möglichkeit des "Wischens" und dem damit möglichen Umschalten darin, dass das Umschalten innerhalb einer Anwendung möglich ist. Bspw. können verschiedene Bilder innerhalb einer Galerie oder verschiedene Webseiten durch eine solche Bewegung dargestellt werden. Der Wechsel zwischen verschiedenen aktiven Anwendungen erfolgt durch Aufrufen eines Taskmanagers und durch Auswählen einer Anwendung. Dies ist jedoch sehr aufwendig.

Aus dem Stand der Technik sind keine Anzeigen für mobile elektronische Geräte bekannt, die ein einfaches und intuitives Ändern von Anzeigen ermöglichen, wodurch zwischen verschiedenen Anwendungen einfach gewechselt werden kann.

### Aufgabe

Es ist daher Aufgabe, den Nachteil der mobilen Geräte, dass sie nur einen Monitor besitzen, durch ein Bedienkonzept auszugleichen, damit dadurch ein professionelles Arbeiten, wie mit einem Mehr-Monitor-System, mit diesen Geräten möglich ist. Zudem ist es Aufgabe ein Verfahren zum Navigieren durch die auf der Anzeigeeinheit eines mobilen elektronischen Geräts dargestellten Inhalte und ein mobiles elektronisches Gerät mit einer Anzeigeeinheit anzugeben, die ein einfaches und intuitives Ändern von Anzeigen ermöglichen.

### Lösung

Die Aufgabe wird durch ein Verfahren mit den in Anspruch 1 angegebenen technischen Merkmalen und durch ein mobiles elektronisches Gerät mit den in Anspruch 8 angegebenen technischen Merkmalen gelöst. Vorteilhafte Weiterbildungen sind in den Unteransprüchen im Detail angegeben.

Bei einem Verfahren zum Navigieren durch die auf der Anzeigeeinheit eines mobilen elektronischen Geräts dargestellten Inhalte, welches die vorstehend genannte Aufgabe löst, wobei das mobile elektronische Gerät mindestens eine Anzeigeeinheit, eine Hauptsteuereinheit und eine Erfassungseinrichtung aufweist und dazu ausgebildet ist, eine Vielzahl von Anwendungsprogrammen über die Anzeigeeinheit graphisch darzustellen, wobei für jedes Anwendungsprogramm mindestens eine Anzeige erstellbar ist,
- werden mindestens zwei Anzeigen generiert,
- erzeugt die Hauptsteuereinheit eine virtuelle Anordnung der mindestens zwei Anzeigen,
- sind die mindestens zwei Anzeigen in der virtuellen Anordnung örtlich versetzt zueinander ausgerichtet,
- wird eine erste Anzeige auf der Anzeigeeinheit dargestellt,
- wird ein Bedienbefehl über die Erfassungseinrichtung erfasst, wobei der Bedienbefehl eine Richtung angibt,
- wird der Bedienbefehl an die Hauptsteuereinheit übermittelt, welche aus dem Bedienbefehl einen Änderungswunsch für eine Änderung der über die Anzeigeeinheit dargestellten Inhalte ermittelt, und die mindestens eine zweite Anzeige auf der Anzeigeeinheit zur Darstellung bringt, welche in der virtuellen Anordnung von Anzeigen eine benachbarte Position in der erfassten Richtung zu der ersten Anzeige aufweist.

Das Generieren mindestens zweier Anzeigen kann durch Aufrufen eines ersten Anwendungsprogramms und mindestens eines zweiten Anwendungsprogramms und/oder durch Aufrufen mindestens einer weiteren Anzeige innerhalb eines Anwendungsprogramms erfolgen. Anwendungsprogramme sind bspw. sogenannte Apps. Die Anwendungsprogramme können insbesondere ein E-Mail-Programm, ein Internet-Browser-Programm, ein Kurznachrichten-Programm, ein "Social-Media"-Programm, ein Textverarbeitungs-Programm, ein Tabellenkalkulations-Programm, ein Präsentations-Programm, ein Audio- und/oder ein Video-Programm, ein Bild-Programm, ein Kamera-Programm, ein Informations-Programm, ein Spiele-Programm, ein Kalender-Programm, ein Unterhaltungs-Programm oder dergleichen sein.

Die virtuelle Anordnung kann eine Ebene und/oder einen Raum definieren und die Anzeigen zugehöriger Anwendungsprogramme können eine feste Position in der virtuellen Anordnung aufweisen.

Die Erfassungseinrichtung kann mindestens einen Sensor aufweisen und die Erfassung eines Bedienbefehls kann über den mindestens einen Sensor erfolgen.

Der Bedienbefehl kann durch mindestens eine Geste, eine Berührung oder eine Augenbewegung einer Bedienperson, eine Bewegung des mobilen elektronischen Geräts oder eine akustische Eingabe einer Bedienperson ausgelöst werden.

Die Anzeigeeinheit kann eine Position in Bezug auf die virtuelle Anordnung aufweisen und die virtuelle Anordnung kann mit mindestens zwei Anzeigen nach Maßgabe des Bedienbefehls relativ zu der Position der Anzeigeeinheit bewegt werden, wobei immer die Anzeige auf der Anzeigeeinheit dargestellt wird, welche sich an der Position der Anzeigeeinheit befindet.

Anwendungsprogrammen oder Anzeigen von Anwendungsprogrammen kann eine Position in der virtuellen Anordnung zugewiesen werden.

Die vorstehend genannte Aufgabe wird auch durch ein mobiles elektronisches Gerät gelöst, das mindestens eine Anzeigeeinheit, eine Hauptsteuereinheit und mindestens eine Erfassungseinrichtung aufweist, wobei das mobile elektronische Gerät dazu ausgebildet ist, eines der vorstehend genannten Verfahren auszuführen.

Die Erfassungseinrichtung kann mindestens einen Sensor aufweisen.

Der mindestens eine Sensor kann ein Lagesensor, ein Bildsensor, ein akustischer Sensor und/oder ein Beschleunigungssensor sein.

Die Anzeigeeinheit kann ein Bildschirm, ein Display oder ein Touch-Display mit einer berührungsempfindlichen Oberfläche sein.

Die Erfassungseinrichtung kann mit der berührungsempfindlichen Oberfläche des Touch-Displays gekoppelt sein.

Da es oft nicht möglich ist, bzw. nicht sinnvoll erscheint, an ein mobiles Gerät einen weiteren oder mehrere weitere Monitore anzuschließen, werden hier sog. "virtuelle Monitore" eingeführt. Die "virtuellen Monitore" werden durch die virtuelle Anordnung gebildet, wobei jeder "virtuelle Monitor" eine Position in der virtuellen Anordnung aufweist. Diese "virtuellen Monitore" sind virtuell um den realen Monitor des Mobilen Geräts herum positioniert, d.h. sie können z.B. in der gleichen Ebene rechts, links, oben, unten oder in virtuellen Ebenen vor oder hinter dem realen Monitor oder in Kombinationen aus beiden angeordnet sein. Es ist damit möglich, z.B. verschiedene Apps, oder verschiedene Internetseiten, oder verschiedene Dokumente usw. auf die virtuellen Monitore zu verteilen.

Die Navigation zu und/oder zwischen den virtuellen Monitoren, kann sowohl über Touch-Bedienung auf dem mobilen elektronischen Gerät (Mobile-Device) erfolgen als auch über Gestensteuerung. Ferner ist es auch eine einfache ParallelVerschiebung des mobilen elektronischen Geräts möglich. Es wird dabei davon ausgegangen, dass alle Monitore (ein realer Monitor und die virtuellen Monitore) in der virtuellen Anordnung zueinander fest in einem Koordinatensystem positioniert sind. Die Lage des Koordinatensystems wird durch die Position des mobilen Geräts festgelegt.

Die Navigation zwischen den Monitoren ist aufgrund dem örtlichen Bezug zu dem mobilen elektronischen Gerät sehr intuitiv und einfach.

Die Anzeige, welche über die Anzeigeeinheit dargestellt wird, entspricht dem realen Monitor. Die Anzeigen, welche über die Anzeigeeinheit nicht dargestellt werden, entsprechen den virtuellen Monitoren.

Zum Erkennen des gewünschten Wechsels vom aktuell realen Monitor-Bild zu einen momentan virtuellen Monitor, können verschiedene Arten von Sensoren verwendet werden. Bspw. werden Lagesensoren, Beschleunigungssensoren, Ortssensoren, Bildsensoren (z.B. Kamera) und/oder akustische Sensoren (z.B. Mikrofon) verwendet. In der Regel weist ein mobiles elektronisches Gerät mindestens einen Sensor auf, der zum Erkennen eines Änderungswunschs der Anzeige über die Anzeigeeinheit verwendet werden. Es ist sogar davon auszugehen, dass eine Vielzahl von mobilen elektronischen Geräte mindestens zwei derartiger Sensoren aufweist, so dass auch ein fehlerfreies Erkennen eines Änderungswunsches möglich ist, ohne dass es zu einer Fehlinterpretation aufgrund nur eines verwendeten Sensors.

Es können ein einzelner Sensortyp oder mehrere Sensortypen sowie eine Kombination aus verschiedenen oder gleichen Sensoren verwendet werden.

Es ist auch möglich, die Augenbewegungen einer Bedienperson zum Erfassen eines Bedienbefehls zu verwenden. In weiteren Ausführungen können nur die Augenbewegungen einer Bedienperson verwendet werden, um zwischen den verschiedenen Anzeigen (realer Monitor, virtuelle Monitore) hin- und herzuschalten. Dies kann von der Bedienperson eines mobilen elektronischen Geräts als nicht empfehlenswert empfunden werden, da sich dabei das Auge vom realen Monitor "wegbewegen" muss und somit ein intuitives Ändern der Anzeige über die Anzeigeeinheit nicht-intuitiv erfolgt. Dies kann als "unbequem" bzw. anstrengend empfunden werden. Jedoch ist das Navigieren durch die auf der Anzeigeeinheit eines mobilen elektronischen Geräts dargestellten Inhalte über eine Bewegung der Augen ebenfalls eine mögliche Art oder eine zusätzliche Hilfs-Art zum Wechseln der Anzeigen, die auf der Anzeigeeinheit dargestellt werden, oder zur Vermeidung eines Wechsels der Anzeigen. Daher kann die Augenbewegung oder Blickrichtung einer Bedienperson dazu verwendet werden, da bei dieser Art der Navigation die Bedienperson sein mobiles elektronisches Gerät fast immer fest im Blick hat, d.h. er schaut die Anzeigeeinheit während der Navigationsbewegung an und verfolgt die Anzeige.

Hiermit könnte zusätzlich eine Fehlinterpretation einer Bewegung des mobilen elektronischen Gerätes verhindert werden. Bspw. wenn einer anderen Person das aktuell reale Monitorbild, d.h. die aktuell über die Anzeigeeinheit dargestellte Anzeige, gezeigt werden soll und deshalb das mobile elektronische Gerät zu der anderen Person hingedreht wird. Anhand der Bewegung des mobilen elektronischen Gerätes und gegebenenfalls der Blickrichtung der Bedienperson kann festgestellt werden, welches virtuelle Monitorbild aktuell dargestellt werden soll bzw. ob ein Wechsel zu einem anderen Monitorbild angestrebt wird.

Es ist darüber hinaus möglich, einen der virtuellen Monitore bzw. eine der Anzeigen oder eine aktuelle Anzeige ("realer Monitor") als Haupt-Anzeige ("Haupt-Monitor") zu definieren. Ein Aufrufen und Darstellen der Hauptanzeige über die Anzeigeeinheit von jeder beliebigen Anzeige (Monitor-Bild), welche aktuell über die Anzeigeeinheit dargestellt wird und somit als realer Monitor verwendet wird, ist mit einer besonderen Aktion bzw. einem weiteren Bedienbefehl möglich. Solche besonderen Aktionen oder weitere Bedienbefehle können beispielsweise eine Spracheingabe oder eine spezielle Bewegung (z.B. einmaliges, schnelles Hin- und Herbewegen des mobilen elektronischen Gerätes, Gesten usw.) sein.

Die Bedienfehle zum Navigieren durch die Inhalte basieren grundsätzlich auf Aktionen von einer Bedienperson. Beispielsweise bewegt eine Bedienperson das mobile elektronische Gerät auf eine bestimmte Art, die Bedienperson führt eine Geste aus oder bewegt sein Augen in eine bestimmte Richtung, die Bedienperson gibt einen akustischen Befehl aus oder die Bedienperson berührt eine Bedienoberfläche der Anzeigeeinheit und führt auf der Bedienoberfläche eine Bewegung aus. In weiteren Ausführungen sind mindestens zwei Aktionen erforderlich damit ein Bedienbefehl zum Navigieren ausgegeben wird. In noch weiteren Ausführungen werden mindestens zwei Bedienbefehle zu einem gemeinsamen Bedienbefehl zusammengefasst und ein Navigieren erfolgt nur dann, wenn der Bedienbefehl ein gemeinsamer Bedienbefehl ist und/oder die Bedienbefehle die gleiche Richtung angeben.

Die Aktionen (z.B. Parallelverschiebung des mobilen elektronischen Gerätes und Folgen des mobilen elektronischen Gerätes mit dem Auge), die zur Bedienung (Umschalten vom momentan realen Monitor zu einem momentan virtuellen Monitor, sowie ein Umschalten von einem momentan realen Monitor zum Hauptmonitor) nötig sind, können standardmäßig hinterlegt sein. Sie können aber auch individuell eingerichtet werden. Auch ist es möglich die erforderlichen Aktionen zu ändern und/oder neue Aktionen hinzuzufügen sowie eine Kombination von Aktionen für eine Navigation zusammenzufassen oder als gemeinsame Bedingung festzulegen.

Der Abstand der einzelnen "virtuellen Monitore" bzw. Anzeigen in der virtuellen Anordnung zueinander ist als Standard definiert, kann aber auch individuell eingerichtet werden. Es ist auch möglich, die Abstände so zu definieren, dass die einzelnen Monitore virtuell überlappend angeordnet sind. Hiermit kann auch der "Fang-Wert" beim Durchführen einer Bewegung zum Umschalten zwischen den einzelnen Monitoren definiert werden.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1a,b: schematische Darstellungen einer virtuellen Anordnung;
- Fig. 2a, b: schematische Darstellungen weiterer virtueller Anordnungen;
- Fig. 3a,b: schematische Darstellungen noch weiterer virtueller Anordnungen;
- Fig. 4: eine schematische Darstellung einer weiteren virtuellen Anordnung; und
- Fig. 5: eine schematische Darstellung einer noch weiteren virtuellen Anordnung.

In den Figuren mit gleichen Bezugszeichen versehene Teile entsprechen im Wesentlichen einander, sofern nichts anderes angegeben wird. Darüber hinaus wird darauf verzichtet Bestandteile und Verfahrensschritte zu beschreiben, welche nicht wesentlich zum Verständnis der hierin offenbarten technischen Lehre sind.

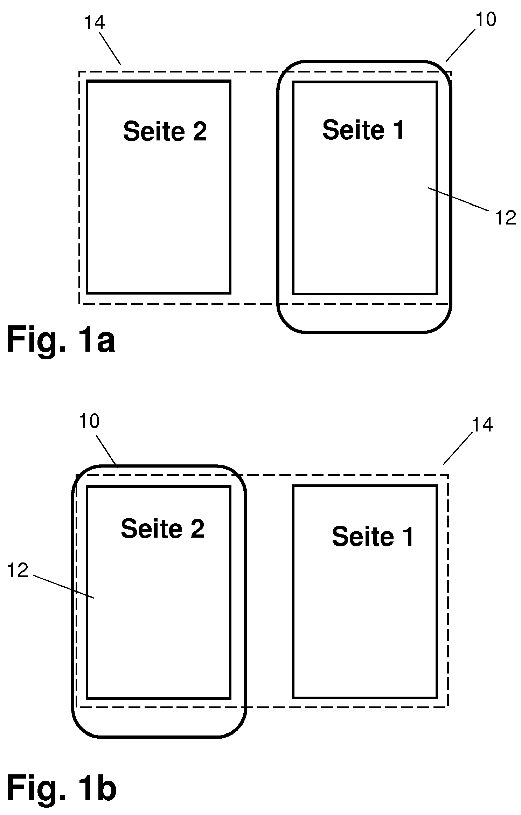

Fig. 1 zeigt eine schematische Darstellung einer virtuellen Anordnung 14, welche zwei Anzeigen umfasst. Die Anzeigen werden durch die rechteckigen Blöcke angegeben, wobei eine erste Anzeige eine Seite 1 und eine zweite Anzeige eine Seite 2 darstellt. Die Seiten 1 bis n (Fig. 1 bis 5) können die Darstellung verschiedener Anwendungsprogramme oder auch Untermenüs in einem Anwendungsprogramm sein. Darüber hinaus können in einer virtuellen Anordnung 14 mit einer Vielzahl von Anzeigen bzw. virtuellen Monitoren oder Seiten ein Teil der Seiten durch verschiedene Anwendungen und ein anderer Teil der Seiten durch Untermenüs der jeweiligen Anwendungen gebildet werden.

Die Anwendungen und Untermenüs umfassen beispielsweise grafische Darstellungen, Videos, Texte, Spiele und andere Inhalte. Ein mobiles elektronisches Gerät 10 ist beispielsweise ein sogenanntes Smartphone und weist eine Anzeigeeinheit 12 sowie nicht dargestellte weitere Komponenten auf. Die Komponenten umfassen nicht abschließend eine Hauptrecheneinheit, eine Erfassungseinrichtung zum Erfassen von Gesteneingaben und Bewegungen zum Navigieren durch die über die Anzeigeeinheit 12 dargestellten Inhalte, einen Speicher, eine Kamera, ein Mikrofon, eine Energieversorgungseinheit, bspw. in Form eines wieder aufladbaren Akkus, ein Gehäuse und weitere nicht beschriebene Komponenten.

Die Erstellung der virtuellen Anordnung 14 kann auf verschiedene Arten erfolgen. In einer Ausführungsform werden Seiten für die jeweiligen Anzeigen erst dann gebildet und in die virtuelle Anordnung 14 aufgenommen und angeordnet, wenn über ein entsprechendes Menü ein Anwendungsprogramm geöffnet oder ein Untermenü in einem Anwendungsprogramm geöffnet wird. In alternativen Ausführungsformen können die einzelnen Anwendungsprogramme eine feste Position in der virtuellen Anordnung 14 aufweisen. Das bedeutet, dass die Position der jeweiligen Anwendungsprogramme in der virtuellen Anordnung 14 fest vorgegeben ist. In anderen Ausführungsformen werden die Anwendungsprogramme und deren entsprechende Anzeigen in der Reihenfolge in der virtuellen Anordnung 14 angeordnet, in der sie geöffnet bzw. aufgerufen werden.

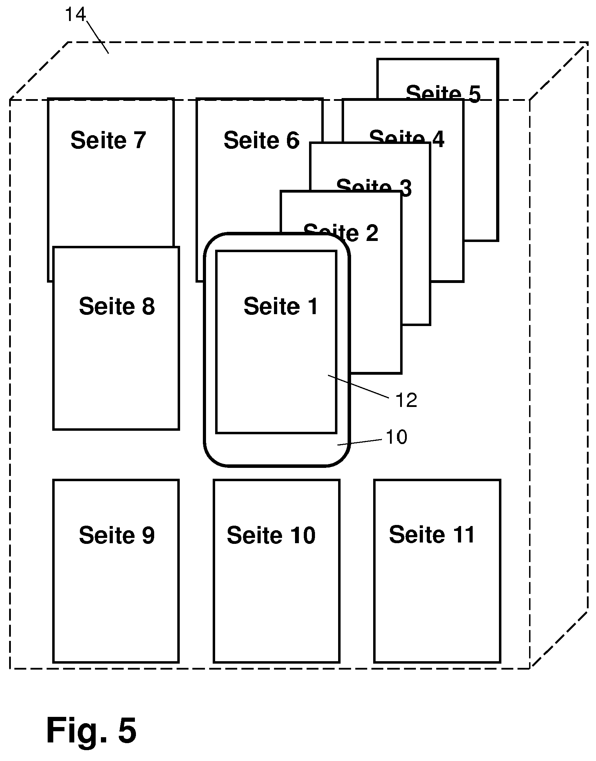

In noch weiteren Ausführungsformen ist jedem Anwendungsprogramm eine feste Position in der virtuellen Anordnung 14 vorgegeben. Werden in einem Anwendungsprogramm weitere Untermenüs geöffnet, so erfolgt eine virtuelle Anordnung 14 wie sie in Fig. 5 gezeigt ist. Bei der in Fig. 5 gezeigten Darstellung weisen die Seite 1, die Seite 8, die Seite 9, die Seite 10 und die Seite 11 eine feste Anordnung in der virtuellen Anordnung 14 auf. Wird beispielsweise für die Seite 1 ein Untermenü geöffnet, so werden die diesem Anwendungsprogramm zugeordneten Untermenüs der Seite 2, Seite 3, Seite 4 und Seite 5 räumlich hinter der Seite 1 angeordnet. Die Seiten 6 und 7 können beispielsweise ebenfalls mit der Seite 4 verknüpft sein. In weiteren Ausführungsformen beginnt hinter der ersten Ebene mit der Seite 1, Seite 8, Seite 9, Seite 10 und Seite 11 mit Seite 4, Seite 6 und Seite 7 eine weitere Ebene, in der Anwendungsprogramme eine feste Anordnung aufweisen. Die Seite 2 und Seite 3 stellen dabei Untermenüs für die Seite 1 und die Seite 5 ein entsprechendes Untermenü bzw. Unteranzeige der Seite 4 dar.

Bezugnehmend auf die Fig. 1a und 1b wird ein exemplarisches Verfahren zum Navigieren durch die über die Anzeigeeinheit 12 dargestellten Inhalte beschrieben. Die jeweiligen Anwendungsprogramme für Seite 1 und Seite 2 können beispielsweise fest vorgegeben sein und eine bestimmte Anordnung in der virtuellen Anordnung 14 aufweisen. Die Seite 1 zeigt den Inhalt eines Anwendungsprogramms. Die Seite 1 wird über die Anzeigeeinheit 12 dargestellt und bildet in diesem Beispiel den realen Monitor. Wünscht eine Bedienperson nun zu einem weiteren Anwendungsprogramm zu wechseln bzw. dieses Anwendungsprogramm über die Anzeigeeinheit 12 darzustellen, so verlagert die Bedienperson das mobile elektronische Gerät 10 nach links, bis dieses die Position einnimmt, welche in Fig. 1b gezeigt ist. Bei dieser Ausführung werden die einzelnen Inhalte der Seiten 1 und 2 durch eine Verlagerung des mobilen elektronischen Gerätes 10 gewechselt. Beim Aufrufen einer Startseite oder einen Startanwendung (Seite 1) ist dies die Ausgangsposition für das mobile elektronische Gerät 10. Die virtuelle Anordnung 14 orientiert sich dann an der Position des mobilen elektronischen Gerätes 10 und die jeweiligen Anzeigen über die Seite 1 und Seite 2 werden in Bezug auf die Position des mobilen elektronischen Gerätes 10 ausgerichtet. Das bedeutet, dass eine Startseite bzw. Seite 1 über die Anzeigeeinheit 12 dargestellt wird. Die restlichen Anwendungen bzw. die Seite 2 werden in Abhängigkeit einer vorgegebenen Anordnung bzw. in der Reihenfolge ihres Aufrufs örtlich in Bezug auf die Anzeigeeinheit des mobilen elektronischen Gerätes 10 angeordnet.

Anschließend kann über die Erfassungseinrichtung eine Verlagerung des mobilen elektronischen Gerätes 10 als Bedienbefehl zum Wechseln der Anzeigen erfasst werden. In dem hier gezeigten Ausführungsbeispiel ist der Bedienbefehl zur Darstellung der Seite 2 das seitliche Bewegen des mobilen elektronischen Gerätes 10 nach links. Damit es nicht zu einem versehentlichen Wechsel der Anzeigen kommt, können mindestens zwei Kriterien vorausgesetzt werden, damit eine entsprechende Änderung der Anzeige erfolgt. Beispielsweise könnte eine Bedienperson eine bestimmte Augenbewegung, eine bestimmte Wischbewegung an der Anzeigeeinheit 12, eine akustische Eingabe oder auch ein Drücken und gedrückt halten einer Menütaste bzw. eines entsprechenden Menüfeldes auf der Anzeigeeinheit 12 durchführen und zeitgleich das mobile elektronische Gerät 10 nach links bewegen. Über die Erfassungseinrichtung und die Hauptsteuereinheit wird dies als Wunsch zur Änderung der Anzeige verstanden, wobei die Richtung über entsprechende Lagesensoren erfasst werden kann.

Bei dem in den Fig. 1a und 1b gezeigten Ausführungsbeispiel kann dabei auf einfache Art und Weise das mobile elektronische Gerät 10 bewegt werden, um andere Anzeigen zu generieren, ohne das ein Benutzer ein bestimmtes Anmeldungsprogramm auswählen muss.

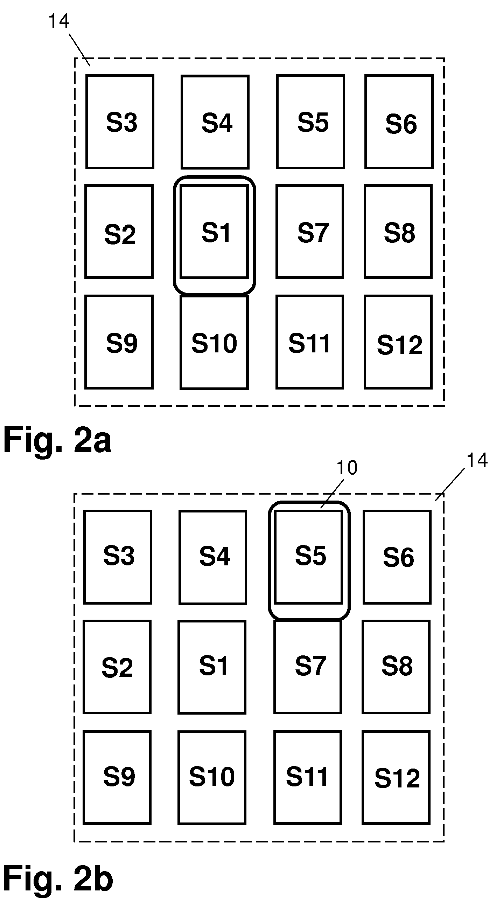

Die Fig. 2a und 2b zeigen eine virtuelle Anordnung 14, welche zwölf Anzeigen für verschiedene Anwendungsprogramme aufweist. Die Position der Anzeigen S1 bis S12 ist fest in der virtuellen Anordnung 14 vorgegeben oder kann in der Reihenfolge des Aufrufs bzw. einer Wichtigkeit oder einer eingestellten Reihenfolge einer Bedienperson erfolgen.

Erfolgt nun ein Bewegen des mobilen elektronischen Gerätes 10 nach oben, nach unten, nach links und nach rechts, so werden die Anzeigen über die Anzeigeeinheit 12 entsprechend der Position des mobilen elektronischen Gerätes 10 verändert. Damit eine Bewegung des mobilen elektronischen Gerätes 10 nicht versehentlich als Bedienbefehl zur Änderung der Anzeige erfasst wird, kann eine Kombination von zwei Bedienbefehlen notwendig sein, wie bereits in Bezug auf Fig. 1 beschrieben.

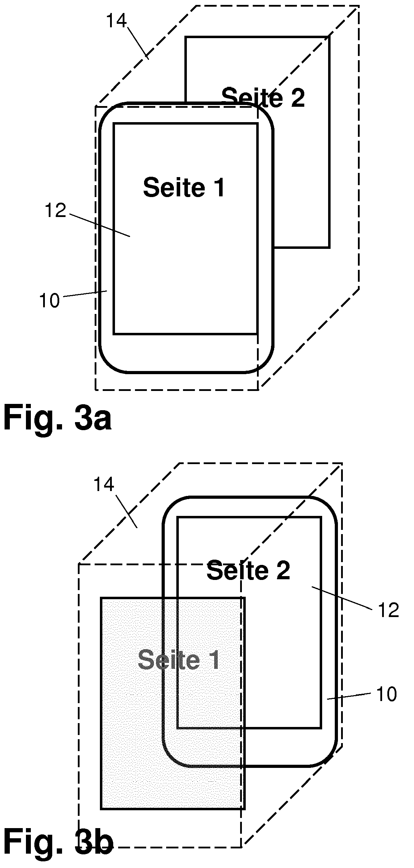

Fig. 3a und Fig. 3b zeigen eine weitere alternative Ausführung mit einer virtuellen Anordnung 14, bei der die einzelnen Anzeigen der jeweiligen Anwendungsprogramme hintereinander angeordnet sind. Bei dieser Ausführung wird das elektronische Gerät 10 nach vorne und nach hinten bewegt, um eine Änderung der Anzeige über die Anzeigeeinheit 12 durchzuführen.

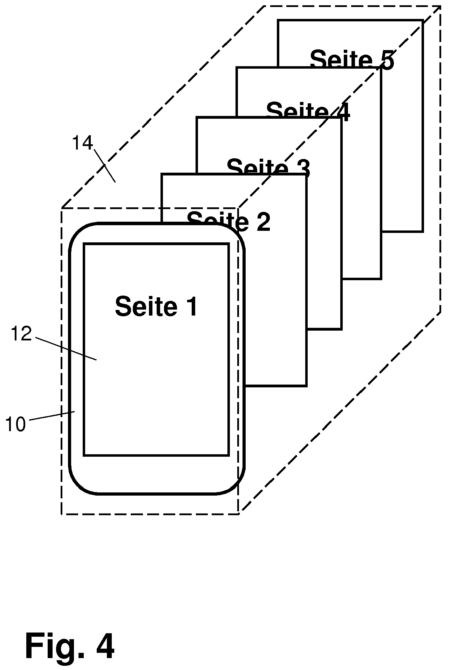

Fig. 4 zeigt ebenfalls eine Ausführungsform mit einer virtuellen Anordnung 14, bei welcher die Anzeigen bzw. virtuellen Monitore (Seite 2, Seite 3, Seite 4 und Seite 5) und der reale Monitor (Seite 1) hintereinander angeordnet sind. Ein Wechsel der Anzeigen erfolgt durch eine Verlagerung des mobilen elektronischen Gerätes 10 nach hinten bzw. nach vorne.

Fig. 5 zeigt eine weitere virtuelle Anordnung 14, bei der die einzelnen Anzeigen der Anwendungsprogramme bzw. deren Untermenüs nebeneinander, unter- bzw. übereinander und hintereinander angeordnet sind. Die virtuelle Anordnung 14 umfasst dabei einen Raum mit mehreren Ebenen, wobei in den jeweiligen Ebenen Anzeigen verschiedener Anwendungsprogramme angeordnet sind. Dargestellt über die Anzeigeeinheit 12 wird jedoch nur die Anzeige bzw. Seite, an deren Position sich das mobile elektronische Gerät 10 befindet. Ein Wechsel der Anzeige über die Anzeigeeinheit 12 erfolgt ebenfalls über ein Bewegen des mobilen elektronischen Gerätes 10, sowohl nach unten, nach oben als auch nach rechts und links sowie nach hinten und vorne. Damit eine Bewegung des mobilen elektronischen Gerätes 10 nicht versehentlich als Bedienbefehl zum Navigieren durch die virtuelle Anordnung 14 verstanden wird, kann eine zusätzliche Eingabe oder Aktion einer Bedienperson erforderlich sein.

Weiter kann eine Bedienperson, welche über die Anzeigeeinheit 12 eine beliebige Anzeige dargestellt bekommt durch Drücken einer Menütaste oder durch Ausgeben eines Sprachbefehls oder beispielsweise durch eine bestimmte Geste oder Handlung (wie zum Beispiels kurzes Schütteln des mobilen elektronischen Gerätes 10) wieder zu einer Startanzeige (beispielsweise Seite 1) gelangen. In weiteren Ausführungsformen ist die Anordnung der einzelnen Anzeigen der jeweiligen Anwendungsprogramme fest vorgegeben. Es erfolgt kein Auswählen einzelner Symbole in einem Smartphone und ein anschließendes Öffnen der jeweiligen Anwendungsprogramme, wobei über einen Taskmanager diese Programme dann ausgewählt werden können, wenn mehrere gleichzeitig geöffnet sind, sondern die jeweiligen Anwendungsprogramme sind über ihre Anzeigen in der virtuellen Anordnung 14 darstellbar. Möchte eine Bedienperson beispielsweise ein Anwendungsprogramm angezeigt bekommen bzw. damit arbeiten, welches durch die Seite 11 repräsentiert wird, so bewegt er das mobile elektronische Gerät 10 entweder nach unten und zur Seite oder zuerst zur Seite und nach unten oder bewegt das mobile elektronische Gerät 12 schräg von der Position auf Seite 1 zu der Seite 11.

Ferner kann eine Bedienperson beispielsweise für das Anwendungsprogramm der Seite 1 eine weitere Unterseite öffnen, die dann in der virtuellen Anordnung 14 hinter der Seite 1 angeordnet wird (beispielsweise Seite 2, Seite 3). Die virtuelle Anordnung 14 umfasst dann jeweils immer nur ein Anwendungsprogramm, welches eine definierte Position in der virtuellen Anordnung 14 aufweist. Untermenüs oder Unterseiten, die für die jeweiligen Anwendungsprogramme geöffnet werden, werden in der virtuellen Anordnung 14 dann beispielsweise hinter einer ersten Ebene oder hinter einer zweiten Ebene usw. angeordnet. Die virtuelle Anordnung ist dabei nicht fest vorgegeben, sondern lässt eine Erweiterung durch zusätzliche Anwendungsprogramme bzw. deren Anzeigen zu.

## Patentansprüche

1. Verfahren zum Navigieren durch die auf der Anzeigeeinheit (12) eines mobilen elektronischen Geräts (10) dargestellten Inhalte, wobei das mobile elektronische Gerät (10) mindestens eine Anzeigeeinheit (12), eine Hauptsteuereinheit und eine Erfassungseinrichtung aufweist und dazu ausgebildet ist, eine Vielzahl von Anwendungsprogrammen über die Anzeigeeinheit graphisch darzustellen, wobei für jedes Anwendungsprogramm mindestens eine Anzeige erstellbar ist, und wobei
- mindestens zwei Anzeigen generiert werden,
- die Hauptsteuereinheit eine virtuelle Anordnung (14) der mindestens zwei Anzeigen erzeugt,
- die mindestens zwei Anzeigen in der virtuellen Anordnung (14) örtlich versetzt zueinander ausgerichtet sind,
- eine erste Anzeige auf der Anzeigeeinheit (12) dargestellt wird,
- ein Bedienbefehl über die Erfassungseinrichtung erfasst wird, wobei der Bedienbefehl eine Richtung angibt,
- der Bedienbefehl an die Hauptsteuereinheit übermittelt wird, welche aus dem Bedienbefehl einen Änderungswunsch für eine Änderung der über die Anzeigeeinheit (12) dargestellten Inhalte ermittelt, und die mindestens eine zweite Anzeige auf der Anzeigeeinheit (12) zur Darstellung bringt, welche in der virtuellen Anordnung (14) von Anzeigen eine benachbarte Position in der erfassten Richtung zu der ersten Anzeige aufweist.

2. Verfahren nach Anspruch 1, wobei das Generieren mindestens zweier Anzeigen durch Aufrufen eines ersten Anwendungsprogramms und mindestens eines zweiten Anwendungsprogramms und/oder durch Aufrufen mindestens einer weiteren Anzeige innerhalb eines Anwendungsprogramms erfolgt.

3. Verfahren nach Anspruch 1 oder 2, wobei die virtuelle Anordnung (14) eine Ebene und/oder einen Raum definiert und die Anzeigen zugehöriger Anwendungsprogramme eine feste Position in der virtuellen Anordnung (14) aufweisen.

4. Verfahren nach einem der Ansprüche 1 bis 3, wobei die Erfassungseinrichtung mindestens einen Sensor aufweist und die Erfassung eines Bedienbefehls über den mindestens einen Sensor erfolgt.

5. Verfahren nach einem der Ansprüche 1 bis 4, wobei der Bedienbefehl durch mindestens eine Geste, eine Berührung oder eine Augenbewegung einer Bedienperson, eine Bewegung des mobilen elektronischen Geräts oder eine akustische Eingabe einer Bedienperson ausgelöst wird.

6. Verfahren nach einem der Ansprüche 1 bis 5, wobei die Anzeigeeinheit (12) eine Position in Bezug auf die virtuelle Anordnung (14) aufweist und die virtuelle Anordnung (14) mit mindestens zwei Anzeigen nach Maßgabe des Bedienbefehls relativ zu der Position der Anzeigeeinheit (12) bewegt wird, und wobei immer die Anzeige auf der Anzeigeeinheit (12) dargestellt wird, welche sich an der Position der Anzeigeeinheit (12) befindet.

7. Verfahren nach einem der Ansprüche 1 bis 6, wobei Anwendungsprogrammen oder Anzeigen von Anwendungsprogrammen eine Position in der virtuellen Anordnung (14) zugewiesen wird.

8. Mobiles elektronisches Gerät mit einer Anzeigeeinheit (12), einer Hauptsteuereinheit und mindestens einer Erfassungseinrichtung, wobei das mobile elektronische Gerät (10) dazu ausgebildet ist, eines der Verfahren der Ansprüche 1 bis 7 auszuführen.

9. Mobiles elektronisches Gerät nach Anspruch 8, wobei die Erfassungseinrichtung mindestens einen Sensor aufweist.

10. Mobiles elektronisches Gerät nach Anspruch 9, wobei der mindestens eine Sensor ein Lagesensor, ein Bildsensor, ein akustischer Sensor und/oder ein Beschleunigungssensor ist.

11. Mobiles elektronisches Gerät nach einem der Ansprüche 8 bis 10, wobei die Anzeigeeinheit (12) ein Bildschirm, ein Display oder ein Touch-Display mit einer berührungsempfindlichen Oberfläche ist.

12. Mobiles elektronisches Gerät nach Anspruch 11, wobei die Erfassungseinrichtung mit der berührungsempfindlichen Oberfläche des Touch-Displays gekoppelt ist.
